Europäisches Patentamt

European Patent Office

Office européen des brevets

(19)

(11) **EP 0 633 299 B1**

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(51) Int Cl.7: **C09D 11/02**

(21) Anmeldenummer: **94108042.6**

(22) Anmeldetag: **25.05.1994**

(54) **Offset-Druckfarbe**

Offset printing ink

Encre d'impression offset

(84) Benannte Vertragsstaaten:
**DE ES FR GB IT**

(30) Priorität: **09.07.1993 DE 4322997**

(43) Veröffentlichungstag der Anmeldung:
**11.01.1995 Patentblatt 1995/02**

(73) Patentinhaber: **MERCK PATENT GmbH**
**64293 Darmstadt (DE)**

(72) Erfinder:
• **Herget, Gerhard, Dr.**
**D-64372 Ober-Ramstadt (DE)**
• **Hechler, Wolfgang**
**D-64686 Lautertal (DE)**
• **Husseini, Brigitte**
**D-64293 Darmstadt (DE)**
• **Mohr, Heinz**
**D-67346 Speyer (DE)**
• **Smolka, Rüdiger**
**D-64625 Bensheim (DE)**

(56) Entgegenhaltungen:
**EP-A- 0 523 567        DE-A- 3 224 558**

Bemerkungen:
Die Akte enthält technische Angaben, die nach dem Eingang der Anmeldung eingereicht wurden und die nicht in dieser Patentschrift enthalten sind.

## Beschreibung

Die vorliegende Erfindung betrifft eine niedrigviskose Offset-Druckfarbe, die im wesentlichen aus einem Bindemittel, Additiven und 5-40 Gew.% an Perlglanzpigmenten besteht.

Offset-Druckfarben bestehen in der Regel aus Bindemittel, Pigmenten oder Farbstoffen und Additiven. Bei Druckerzeugnissen für Verpackungsdrucke, Etiketten und hochwertige Zeitschriften tritt immer häufiger die Forderung auf, den abgebildeten Gegenständen einen hohen Glanz zu verleihen.

Perlglanzpigmentierte Offset-Druckfarben zeigen alle den Nachteil, daß sie Probleme mit der Fortdruckstabilität aufweisen. Sie neigen dazu auf Farbwerk, Druckplatte und Gummituch schnell aufzubauen, so daß ein problemloser Fortdruck über 10000 Bögen in der Regel nicht möglich ist. Weiterhin ist die Glanzgebung solcher Andrucke in der Regel nicht zufriedenstellend, was auf die unzureichende Menge an übertragenden Pigmenten auf das Druckerzeugnis zurückzuführen ist. Die Farbe verarmt auf dem Transportweg über Farbwerk, Platte und Gummituch an Pigment. Letzteres reichert sich an exponierten Stellen auf Platte und Tuch an und führt zu Aufbauen und Pelzen. In der Regel kommen nur Periglanzpigmente mit einer sehr kleinen mittleren Teilchengröße in Frage, da die Teilchengröße kritisch ist für die Pigmentübertragung im Offsetdruck. Solche Pigmente existieren nur für perlweiße und pastell abgetönte Farbgebungen, nicht aber für die sehr interessanten Gold-, Silber-, Bronze- und Kupfertöne. Bisher konnten im Offset-Verfahren solche Farbtöne mit Perlglanzpigmenten nicht zufriedenstellend erzeugt werden.

Der Einsatz von plättchenförmigen Wismutoxichloridpigmenten zur Erzielung eines Perlglanzeffektes führt ebenfalls nicht zu befriedigenden Ergebnissen, da die Pigmentteilchen sehr empfindlich gegen mechanische Scherkräfte sind und im Farbspalt zermahlen werden.

Die Verwendung von Perlglanzpigmenten in Druckfarben für den Offsetdruck ist aus der DE 29 03 212 bekannt, wo die Pigmentierung von einem handelsüblichen Öldrucklack mit einem vorzugsweise sehr feinteiligen Perlglanzpigment offenbart wird. Die dort beschriebene Offset-Drucklack-Zubereitung zeichnet sich dadurch aus, daß der Anteil an Perlglanzpigmenten sehr hoch ist, wobei die Obergrenze der Pigmentkonzentration in der Suspension im wesentlichen nur durch die zu fordernde Fließfähigkeit des Gemisches begrenzt ist. Der Anteil an Perlglanzpigmenten liegt dabei im Bereich bis 65 Gew.%. Lacke mit einem derart hohen Pigmentanteil sind sehr viskos und müssen gegebenenfalls mit einem Verdünner fließfähiger gemacht werden um in herkömmlichen Offset-Druckmaschinen verarbeitbar zu sein. Versuche haben gezeigt, daß im Gegensatz zur Lehre aus der DE 29 03 212, bei solch hohen Pigmentierungen die Pigmentübertragung vom Farbwerk auf das Substrat gestört ist. Es treten Fortdruckstörungen wie Aufbauen und Pelzen auf, d.h. daß der erreichbare Perlglanzeffekt allein durch eine hohe Pigmentierung nicht optimiert werden kann. Weiterhin zeigen die Farbsysteme gemäß der DE 29 03 212 in der Regel eine nicht ausreichende Punktschärfe, so daß die dort beschriebenen Farbsysteme im wesentlichen auf den Druck von Volltonflächen beschränkt sind.

In der EP-A-0 525 567 werden wasserverdünnbare Effektdruckfarben beschrieben, die insbesondere auf dem Lackwerk einer Offsetmaschine und/oder Lackiermaschine verarbeitet werden. Im Gegensatz zur EP-A-0 525 567 ist die erfindungsgemäße Offset-Druckfarbe wasserfrei aufgebaut.

Es bestand daher die Aufgabe eine Offsetdruckfarben-Zubereitung zu finden, die Perlglanzpigmente enthält und dennoch keine der oben genannten Nachteile aufweist.

Überraschenderweise wurde gefunden, daß die Güte des Perlglanzeffektes sowie die Menge an übertragenen Pigmentteilchen optimal wird bei Druckfarbenviskositäten, die < 15 Pas sind. Die erfindungsgemäße pigmentierte Druckfarbe weist Viskositäten < 12 Pas, vorzugsweise < 8 Pas, auf. Die Druckfarben zeigen dabei keinerlei Probleme mit dem Abspritzen von den Farbwalzwerken, auch nicht bei Druckgeschwindigkeiten von 10000 Bögen pro Stunde. Für eine optimale Pigmentübertragung von Farbwerk auf das Substrat ist das Verhältnis Perlglanzpigment/ nicht-flüchtiger Anteil der Farbe entscheidend. Das Verhältnis sollte nicht zu hoch sein, da ansonsten das Pigment nicht zufriedenstellend transportiert werden kann. Vorzugsweise ist das Verhältnis Pigment/nichtflüchtiger Anteil der Farbe < 0,40, insbesondere < 0,30.

Gegenstand der Erfindung ist daher eine Offset-Druckfarbe im wesentlichen bestehend aus Bindemittel, Pigmenten und Additiven, dadurch gekennzeichnet, daß sie Mineralöl, 10 - 30 Gew. % an Perlglanzpigmenten mit einer mittleren Teilchengröße im Bereich von $D_{50}$ = 4 - 100 µm enthält, das Verhältnis Perlglanzpigment/nichtflüchtiger Anteil der Druckfarbe < 0,40 ist und sie eine Viskosität < 12 Pa·s aufweist, mit der Maßgabe, daß die Offset-Druckfarbe wasserfrei aufgebaut ist.

Wesentlicher Bestandteil der erfindungsgemäßen Offset-Druckfarbe ist das Perlglanzpigment oder Perlglanzpigmentgemisch. Der Anteil an Perlglanzpigmenten in der Offsetdruckfarbe beträgt 10-30 Gew. %. Selbst bei nur geringen Pigmentkonzentrationen werden im Gegensatz zum Stand der Technik Druckerzeugnisse mit einem hohen Perlglanz erhalten. Die Farb-/Wasserbalance muß beim Pigmentieren selbstverständlich überwacht und gegebenenfalls korrigiert werden um ein problemloses Fortdrucken ohne Aufbauen auf den Walzen zu gewährleisten.

Geeignete Basissubstrate für die Beschichtung sind transparente plättchenförmige Substrate. Bevorzugte Substrate sind Schichtsilikate sowie Metalloxiden beschichtete plättchenförmige Materialien. Insbesondere geeignet sind Glimmer, Talkum, Kaolin, Wismutoxichlorid, Glas-, $SiO_2$- oder synthetische Keramikflakes, synthetische trägerfreie Plättchen oder andere vergleichbare Materialien. Daneben kommen auch Metallplättchen, wie z.B. Aluminiumplättchen oder plättchenförmige Metalloxide, wie z.B. Aluminiumplättchen oder plättchenförmige Metalloxide, wie z.B. plättchenförmiges Eisenoxid und Glimmerbeschichtungen mit farbigen oder farblosen Metalloxiden wie $TiO_2$, $Fe_2O_3$, $SnO_2$, $Cr_2O_3$, $ZnO$ und anderen Metalloxiden, allein oder in Mischung in einer einheitlichen Schicht oder in aufeinanderfolgenden Schichten. Diese als Perlglanzpigmente bekannten Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt. Vorzugsweise werden für die Druckfarbe Perlglanzpigmente verwendet Insbesondere werden mit $TiO_2$ und/oder $Fe_2O_3$ beschichtete Glimmerpigmente, $SiO_2$- oder Glasflakes verwendet.

Neben den feinteiligen Perlglanzpigmenten können aufgrund der optimalen Übertragungseigenschaft des Bindemittels auch grobkörnige Teilchen verdruckt werden. Vorzugsweise werden in der erfindungsgemäßen Druckfarbe Teilchen mit einer mittleren Teilchengröße von $D_{50}$ = 4-100 µm eingesetzt, insbesondere $D_{50}$ = 5-20 µm. Perlglanzpigmente mit einer mittleren Teilchengröße von $D_{50}$ = 10 µm zeigen im Offset-Verfahren interessante Gold-, Silber-, Bronze- und Kupfertöne.

Zusätzlich zu den Perlglanzpigmenten kann eine Pigmentierung der Offset-Druckfarbe durch Ruß, Metalleffekt-, Fluoreszenz- und/oder organische Buntpigmente erfolgen. Vorzugsweise besteht die Pigmentierung dann aus 50-100 Gew.% Perlglanzpigment und 0-50 Gew.% Ruß, Metalleffekt-, Fluoreszenz- und/oder Buntpigment. Der Gehalt aller Pigmente in der Druckfarbe sollte dabei aber 40 Gew.% nicht überschreiten.

Das Bindemittel bzw. der nichtflüchtige Anteil der erfindungsgemäßen Perlglanz-Offsetdruckfarbe besteht aus bekannten synthetischen oder natürlichen Harzen, trocknenden Ölen, Mineralölen und Additiven, wie sie beispielsweise in Karsten, Lackrohstofftabellen, 9. Auflage 1992, beschrieben werden. Vorzugsweise besitzen die verwendeten Harze eine relativ niedrige Schmelz- bzw. Lösemittelviskosität. Aber auch hochpolymerisierte und hochviskose Anteile können enthalten sein. Als besonders geeignet haben sich Kombinationen aus Hartharzen und Alkydharzen erwiesen, da diese die Perlglanzpigmente besser benetzen und glänzendere sowie reibechtere Drucke ergeben. Insbesondere werden Bindemittel verwendet, die aus 50-90 Gew.% Hartharz und 5-50 Gew.% Alkyharz zusammengesetzt sind. Bei den verwendeten Hartharzen handelt es sich vorzugsweise um Kohlenwasserstoffharze. Die verwendeten Kohlenwasserstoffharze können eine Säurezahl nahe 0 mg KOH/g Substanz haben, sie können aber auch modifiziert sein und Säurezahlen bis 30 mg KOH/g Substanz aufweisen. Weiterhin kann das Bindemittel 1-50 Gew.% eines Mineralöls enthalten. Die Farbanteile sind in einer Weise aufeinander abgestimmt, daß eine für die niedrige Farbviskosität geeignete und stabile Farb/Wasser-Balance erreicht wird.

Die Trocknung der Offsetdruckfarbe erfolgt durch oxidative Polymerisation der Harze und durch Öle, wie z. B. Lein-, Holz- oder Rizinusöl, die beim Drucken in das Papier wegschlagen. Der Trocknungsvorgang kann durch Zusätze von Trocknungskatalysatoren (Sikkative), meist fettsaure Salze von Kobalt, Blei, Mangan usw., weiter beschleunigt werden. Der Anteil an trocknenden Ölen in den erfindungsgemäßen Offset-Druckfarben liegt im Bereich von 0-50 Gew.%, vorzugsweise bei 0-30 Gew.%. Weitere Additive können in die Druckfarbe eingebracht werden, um die Farbeigenschaften für spezielle Anwendungen zu verändern. Diese Zusätze können Wachsverbindungen, Trocknungsmittel, Dispersionsmittel, Lösemittel, Verdicker, Gleitmittel, Pigmentfüllstoffe und/oder Antioxidantien sein. Weitere Details zu den grundsätzlichen Eigenschaften von Offset-Druckfarben finden sich in A. Rosenberg, Der Polygraph (11), 1153 (1987) bzw. B. Grande, Coating (4), 138 (1987).

Häufig ist bei den sehr niedrigviskosen erfindungsgemäßen perlglanzpigmenthaltigen Offset-Druckfarben keine ausreichende Punktschärfe gegeben. Diese ist jedoch gerade in feinen Rastern erforderlich um Zusetzen des Drucks zu vermeiden. Es empfiehlt sich daher die Drucklacke mit Struktur zu versehen. So kann die Zugabe eines Strukturbildners die Punktschärfe ausreichend verbessern. Vorzugsweise enthält die erfindungsgemäße Offset-Druckfarbe dann 0,1-3 Gew.% eines Strukturbildners. Neben der verbesserten Punktschärfe zeigt ein derartig modifizierter Drucklack eine deutlich bessere Pigmentübertragung und bessere Fortdruckeigenschaften.

Gegenstand der Erfindung ist somit auch, daß die Offsetdruckfarbe < 10 Gew.% an Additiven enthält. Weiterhin ist Gegenstand der Erfindung, daß die Offsetdruckfarbe 0,1-3 Gew.% eines Strukturbildners enthält.

Die Herstellung der Offsetdruckfarben-Zubereitung erfolgt durch Dispergierung des Perlglanzpigments in der Farbe mit Hilfe einer Kugelmühle, Sandmühle oder eines Walzenstuhles (Dreiwalzen), gegebenenfalls bei unterschiedlichen Dispergiertemperaturen. Dabei werden die Pigmentteilchen vom Bindemittel umhüllt. Die aus den Geräten auslaufenden Mahlpasten werden anschließend mit den Additiven zum fertigen Produkt versetzt.

Durch die Wahl der Harze in den Bindemitteln und den Anteil an Perlglanzpigmenten in der Offsetdruckfarbe können die für den Druckprozeß ausschlaggebenden Parameter wie Dispergierbarkeit, Zügigkeit und Viskosität individuell eingestellt werden. Die Viskosität und die Zügigkeit sind bei gleichem Farbaufbau voneinander abhängig, können aber durch speziellen Farbaufbau auch gezielt einzeln verändert werden. Hierbei ist zu beachten, daß Druckfarben mit einem zu hohen Grad an Zügigkeit verursachen können, daß Teile des Papiers reißen (Rupfen). Farben mit ungenügender Zügigkeit werden nicht in geeigneter Weise bei dem Druckvorgang übertragen. Wenn das Eindringen der Farbe zu groß ist, wird die Farbe auf der entgegengesetzten Seite des Papiers sichtbar oder verursacht eine Fleckigkeit oder Undeutlichkeit der Abbildung. Eine schlecht kontrollierte Eindringung kann Verschmieren und Ablegen verursachen. Im Gegensatz dazu werden zu viskose Farben nicht in geeigneter Weise aus den Füllquellen zu den Walzen fließen. Die auf dem Markt befindlichen Offset-Druckfarben sind auf Viskositäten im Bereich 12-30 Pas eingestellt. Die erfindungsgemäßen Druckfarben dagegen können auf Viskositäten < 12 Pas, vorzugsweise < 10 Pas, insbesondere < 8 Pas, eingestellt werden.

Die Offsetdruckfarbe kann sowohl für den Rollenoffsetdruck als auch den Bogenoffsetdruck im Trocken- und Naßverfahren verwendet werden; insbesondere geeignet ist sie jedoch für den Bogenoffsetdruck im Naßverfahren. Mit der erfindungsgemäßen Offsetdruckfarbe werden durch die sehr guten rheologischen Eigenschaften sehr hohe Druckgeschwindigkeiten erzielt. Es können leicht 10000 Bögen pro Stunde bedruckt werden, wobei keine Probleme mit dem Fortdruck sowie mit der Rasterpunktschärfe auftreten.

Die Verwendung der erfindungsgemäßen Offsetdruckfarbe ist insbesondere im Hinblick auf graphische Erzeugnisse der Werbebranche und bei hochwertigen Druckerzeugnissen von besonderer Bedeutung, da die fertigen Drucke aufgrund ihres Perlglanzes ästhetisch höchste Ansprüche erfüllen.

Die nachfolgenden Beispiele sollen die Erfindung näher erläutern, ohne sie jedoch zu begrenzen.

**Beispiele**

### I. Beispiel 1 - Vergleichsbeispiel

Eine Bogenoffsetdruckfarbe "Fine Ink" der Fa. Nippon Ink Company wird mit dem Feuchtmittelzusatz "Aquastabil" der Fa. Hartmann Druckfarben angedruckt. Das Feuchtmittel (5 % in Wasser gelöst) wird mit 5 % einer 2%igen Phosphorsäure modifiziert.

Druckplatte: Kalle p5S, Fa. Kalle, Wiesbaden

Drucktuch: Perfect Dot mx, Fa. Streb

Nach 2000 Bögen ist ein deutlicher Pigmentaufbau auf der Druckplatte und dem Drucktuch festzustellen. Der Perlglanzeffekt wird als unzureichend beurteilt. Die Viskosität beträgt 25 Pas bei einem Anteil von 30 Gew.% $TiO_2$-Glimmer-Perlglanzpigmenten mit einer mittleren Teilchengröße $D_{50}$ = 6 µm.

### Beispiel 2

Ein handelsüblicher Öldrucklack 11A0524 der Fa. Gebrüder Schmidt, Frankfurt wird mit Iriodin 123 Hellglanzsatin (mit $TiO_2$ beschichtetes Glimmerpigment der mittleren Teilchengröße $D_{50}$ = 10 µm), bzw. Iriodin 323 Royal Goldsatin (mit $Fe_2O_3/TiO_2$ beschichtetes Glimmerpigment der mittleren Teilchengröße $D_{50}$ = 10 µm der Fa. E. Merck, Darmstadt, BRD) in steigenden Anteilen pigmentiert. Die Druckversuche werden entsprechend Beispiel 1 durchgeführt. Die entsprechenden Viskositäten sowie Pigment- und Bindemittelverhältnisse sind Tabelle 1 zu entnehmen.

### Beispiel 3

85 g des handelsüblichen Drucklackes 11A0524 der Fa. Gebrüder Schmidt, Frankfurt werden mit einer Mischung aus 0,5 g Aliso B (Strukturbildner der Fa. Manchem) und 0,5 g Mineralöl PKWF 28/31 (Fa. Haltermann) versetzt und homogen eingearbeitet. Man pigmentiert mit 15 g Iriodin 123 Hellglanzsatin (mit $TiO_2$ beschichtetes Perlglanzpigment der mittleren Teilchengröße $D_{50}$ = 10 µm) und erhält eine Druckfarbe mit einer Viskosität von η = 5,2 Pas. Die Farbe wird an einer Heidelberger MO bei 6000 Bögen/Stunde unter den Druckbedingungen aus Versuch 1 verdruckt. Die Farbe zeigt über die gesamte Druckdauer keine Tendenz zum Aufbauen. Der Fortdruck ist stabil und man erhält Drucke mit einer optimalen Glanzgebung. Weiterhin zeichnet sich die Farbe durch ihre exzellente Punktschärfe aus. Die Ergebnisse sind Tabelle 1 zusammengestellt.

### Beispiel 4

15 g Bentone 38 (Fa. NL Chemicals) werden in 230 g Öldrucklack 11A0524 der Fa. Gebr. Schmidt/Frankfurt gegeben und mit einem Schnellrührer homogenisiert. Die Suspension wird mit 5 g Isopropanol zu einer Paste verarbeitet.

### Beispiel 5

650 g des handelsüblichen Drucklackes 11 A0524 der Fa. Gebrüder Schmidt, Frankfurt werden mit 200 g der Stammpaste (Beispiel 4) versetzt und homogen gerührt. Man pigmentiert mit 150 g Iriodin 123 Hellglanzsatin und erhält eine Druckfarbe mit der Viskosität 6,2 Pas. Die Farbe wird analog Beispiel 3 verdruckt. Die Ergebnisse sind Tabelle 1 zu entnehmen.

**Beispiel 6**

64,7 g eines Kohlenwasserstoffharzes Hercules A 101 (Fa. Hercules B.V.) werden mit 16,0 g Mineralöl PKWF 28/31 der Fa. Haltermann (Anilinpunkt = 82) sowie 19,3 g eines raffinierten Leinöls mit einer Viskosität > 90 Pas unter Stickstoffatmosphäre bei 200 °C zu einem Firnis verkocht.

15,0 g Alftalat 810 (Fa. Hoechst) werden mit 20 g Iriodin 111 Feinsatin (mit $TiO_2$ beschichtetes Glimmerpigment der mittleren Teilchengröße $D_{50}$ = 6 µm der Fa. E. Merck, Darmstadt, BRD) sowie 3 g Ölsäure (Fa. E. Merck) zu einer Paste verarbeitet und anschließend mit 59 g des Kohlenwasserstoffirnisses, 1,5 g Mineralöl PKWF 28/31 (Fa. Haltermann) sowie 1,5 g 2,2,4-Trimethyl-1,3-pentandioldiisobutyrat (Fa. Eastman) zu einer homogenen Farbe verarbeitet. Man versetzt zur Komplettierung mit 0,83 g Trockenstoff (Chrom- und Mangansalze) der Fa. Hartmann. Die Viskosität der fertigen Druckfarbe beträgt 5,5 Pas. Die Ergebnisse sind in Tabelle 1 zusammengestellt.

**II. Ergebnisse**

Die Messung der Viskosität erfolgt nach DIN 53222 (1990) bei 25 °C. Dabei wird nach Casson ausgewertet und die plastische Viskosität nach der Formel

$$\eta_\infty = 0,1 \cdot g/S \cdot C \cdot a^2 \text{ [Pas]}$$

bestimmt, wobei

g =    Erdbeschleunigung,
S =    Reibfläche des Fallstabes,
C =    Gerätekonstante, bestimmt durch Kalibrierung der Meßapparatur mit einem Eichöl 20000A der PTB, Braunschweig und Berlin,
a =    Steigung der Regressionsgeraden y = ax + b mit y = $\sqrt{m_1} + m_0$, x = $\sqrt{1/t}$ mit $m_i$ = Auflagegewicht und $m_0$ = Masse des Fallstabes.

Alle Einheiten sind CGS-Einheiten (Centimeter, Gramm, Sekunde).

Das Verhältnis Perlglanzpigment/nichtflüchtiger Anteil der Druckfarbe wird in Anlehnung an die Norm DIN 53219 bestimmt. Die Proben werden bei 110 °C und einem Vakuum von 5 Torr bis zur Gewichtskonstanz getrocknet.

Der erreichte Perlglanzeffekt wird visuell beurteilt. Weiterhin werden mikroskopische Aufnahmen angefertigt und die Anzahl Perlglanzpigmentplättchen pro Flächeneinheit bestimmt.

Tabelle 1

| Bestandteile der Druckfarbe [Gew.%] | Beispiel | | | | | | |
|---|---|---|---|---|---|---|---|
| | 2 | 2 | 2 | 2 | 3 | 5 | 6 |
| Bindemittel 11A0524 (Gebr. Schmidt, Frankfurt) | 83 | 78 | 78 | 77 | 83 | 83 | - |
| Bindemittel aus Beispiel 6 | - | - | - | - | - | - | 80 |
| Iriodin 111 Feinsatin | - | - | - | - | - | - | 20 |
| Iriodin 123 Hellglanzsatin | 15 | 20 | 30 | - | 15 | 15 | - |
| Iriodin 323 Royal Goldsatin | - | - | - | 20 | - | - | - |
| Farbmittel ROT (Fa. Kast + Ehinger) | 2 | 2 | 2 | - | 2 | 2 | - |
| Farbmittel GELB (Fa. Kast + Ehinger) | - | - | - | 3 | - | - | - |
| P/NF[1] | 0,229 | 0,296 | 0,417 | 0,296 | 0,227 | 0,228 | 0,206 |
| $\eta_\infty$ [Pas] | 4,8 | 4,5 | 5,7 | 4,5 | 5,2 | 6,2 | 5,5 |
| Druckversuch (Auflage in Tausend) | > 10 | - | 0,4 | - | > 5 | 3,5 | - |
| Effekt[2] | 4 | - | 3 | - | 5 | 5 | - |

1: Verhältnis Perlglanzpigmentmasse/Masse nichtflüchtiger Anteil der Druckfarbe = P/NF

2: Abstufung (mikroskopische Bewertung der Druckmuster)
1 = sehr wenig; 2 = wenig; 3 = mittel; 4 = viel; 5 = sehr viel

**Patentansprüche**

1. Offset-Druckfarbe im wesentlichen bestehend aus Bindemittel, Pigmenten und Additiven, **dadurch gekennzeichnet**, **daß** sie Mineralöl, 10 - 30 Gew.% an Perlglanzpigmenten mit einer mittleren Teilchengröße im Bereich von $D_{50}$=4-100 µm enthält, das Verhältnis Perlglanzpigment/nichtflüchtiger Anteil der Druckfarbe < 0,40 ist und sie eine Viskosität < 12 Pa.s aufweist, mit der Maßgabe, daß die Offset-Druckfarbe wasserfrei aufgebaut ist.

2. Offset-Druckfarbe nach Anspruch 1, **dadurch gekennzeichnet**, **daß** das Perlglanzpigment aus mit $TiO_2$ und/oder $Fe_2O_3$ beschichteten Glimmerplättchen, $SiO_2$-, Glas-, Keramik- oder synthetischen Flakes besteht.

3. Offset-Druckfarbe nach Anspruch 1, **dadurch gekennzeichnet**, **daß** die Farbe 40-95 Gew.% an Bindemittel enthält.

4. Offset-Druckfarbe nach Anspruch 1, **dadurch gekennzeichnet**, **daß** der Anteil an Additiven < 10 Gew.% ist.

5. Offset-Druckfarbe nach Anspruch 1, **dadurch gekennzeichnet**, **daß** das Bindemittel aus 50-90 Gew.% Hartharz, 5-50 Gew.% Alkydharz und 0-50 Gew.% trocknenden Ölen besteht.

6. Offset-Druckfarbe nach Anspruch 5, **dadurch gekennzeichnet**, **daß** das Hartharz ein Kohlenwasserstoffharz oder ein modifiziertes Kohlenwasserstoffharz mit einer Säurezahl < 50 mg KOH/g Substanz ist.

7. Offset-Druckfarbe nach Anspruch 1, **dadurch gekennzeichnet**, **daß** der Pigmentanteil zu 50-100 Gew.% aus Perlglanzpigmenten und zu 0-50 Gew.% aus Ruß, Metalleffekt-, Fluoreszenz- und/oder Buntpigmenten besteht.

8. Offset-Druckfarbe nach Anspruch 1, **dadurch gekennzeichnet**, **daß** sie 0,1-3 Gew. % eines Strukturbildners enthält.

9. Offset-Druckfarbe nach Anspruch 1, **dadurch gekennzeichnet**, **daß** sie 1-10 Gew.% an Mineralöl enthält.

**Claims**

1. Offset printing ink essentially comprising binders, pigments and additives, **characterized in that** it contains mineral oil, 10-30% by weight of pearlescent pigments having a mean particle size $D_{50}$ in the range from 4 to 100 Mm, the pearlescent pigment : non-volatile printing ink component ratio is < 0.40, and it has a viscosity of < 12 Pas, with the proviso that the offset printing ink has an anhydrous construction.

2. Offset printing ink according to Claim 1, **characterized in that** the pearlescent pigment comprises $TiO_2$- and/or $Fe_2O_3$-coated mica platelets, $SiO_2$ flakes, glass flakes, ceramic flakes or synthetic flakes.

3. Offset printing ink according to Claim 1, **characterized in that** the ink contains 40-95 % by weight of binder.

4. Offset printing ink according to Claim 1, **characterized in that** the proportion of additives is < 10 % by weight.

5. Offset printing ink according to Claim 1, **characterized in that** the binder comprises 50-90 % by weight of hard resin, 5-50 % by weight of alkyd resin and 0-50 % by weight of drying oils.

6. Offset printing ink according to Claim 5, **characterized in that** the hard resin is a hydrocarbon resin or a modified hydrocarbon resin having an acid number of < 50 mg of KOH/g of substance.

7. Offset printing ink according to Claim 1, **characterized in that** the pigment component comprises 50-100 % by weight of pearlescent pigments and 0-50 % by weight of carbon black or metal effect, fluorescent and/or coloured pigments.

8. Offset printing ink according to Claim 1, **characterized in that** it contains 0.1-3 % by weight of a structure former.

9. Offset printing ink according to Claim 1, **characterized in that** it contains 1-10 % by weight of mineral oil.

## Revendications

1. Encre d'imprimerie offset constituée essentiellement de liants, de pigments et d'additifs, **caractérisée en ce qu'**elle contient une huile minérale, de 10 à 30% en poids de pigments d'un brillant nacré ayant une taille moyenne de particules dans la gamme de $D_{50}$ = 4-100 µm, en ce que le rapport pigment brillant nacré/partie non volatile de l'encre d'imprimerie est < 0,40 et en ce qu'elle présente une viscosité < 12 Pa·s, avec la condition que l'encre d'imprimerie offset ait une constitution anhydre.

2. Encre d'imprimerie offset selon la revendication 1, **caractérisée en ce que** le pigment d'un brillant nacré est constitué de plaquettes de mica recouvertes de $TiO_2$ et/ou de $Fe_2O_3$, de paillettes de $SiO_2$, verre, céramique ou synthétiques.

3. Encre d'imprimerie offset selon la revendication 1, **caractérisée en ce que** l'encre contient de 40 à 95% en poids de liant.

4. Encre d'imprimerie offset selon la revendication 1, **caractérisée en ce que** la proportion d'additifs est < 10% en poids.

5. Encre d'imprimerie offset selon la revendication 1, **caractérisée en ce que** le liant est constitué de 50 à 90% en poids de résine durcie, de 5 à 50% en poids de résine alkyde et de 0 à 50% en poids d'huiles siccatives.

6. Encre d'imprimeric offset selon la revendication 5, **caractérisée en ce que** la résine durcie est une résine hydrocarbonée ou une résine hydrocarbonée modifiée ayant un indice d'acide < 50 mg KOH/g de substance.

7. Encre d'imprimerie offset selon la revendication 1, **caractérisée en ce que** la proportion de pigments est constituée de 50 à 100% en poids de pigments brillant nacré et de 0 à 50% en poids de noir de carbone, de pigments à effet métallique, à fluorescence et/ou colorés.

8. Encre d'imprimerie offset selon la revendication 1, **caractérisée en ce qu'**elle contient de 0,1 à 3% en poids d'un agent de texture.

9. Encre d'imprimerie offset selon la revendication. 1, **caractérisée en ce qu'**elle contient de 1 à 10% en poids d'une huile minérale.